# EUROPÄISCHE PATENTSCHRIFT

(11) **EP 1 640 499 B1**
(45) Veröffentlichungstag und Bekanntmachung des Hinweises auf die Patenterteilung: **03.03.2010**
(21) Anmeldenummer: 05015834.4
(22) Anmeldetag: 21.07.2005
(51) Int. Cl.: E01B 19/00, B61D 17/22

(54) **Verfahren und Vorrichtung zur Verminderung einer Aufwirbelung von losen Objekten aus dem Gleisbett bei der Überfahrt von Zügen**
Method and device for reducing the moving of particles from the track bed due to turbulence caused by passing trains
Procédé et dispositif pour diminuer le tourbillonnement d'objets soulevés du ballast lors du passage de trains

(30) Priorität: 25.08.2004 DE 102004041363
(43) Veröffentlichungstag der Anmeldung: 29.03.2006
(73) Patentinhaber: Deutsche Bahn AG, 10785 Berlin (DE)
(72) Erfinder: Deeg, Peter, 80801 München (DE)
(74) Vertreter: Zinken-Sommer, Rainer

(56) Entgegenhaltungen:
- EP-A1- 0 050 200
- EP-A1- 0 057 765
- DE-A1- 2 542 779
- DE-A1- 2 542 780
- DE-A1- 3 021 870
- DE-A1- 4 012 277
- DE-A1- 4 415 793
- DE-A1- 4 419 798
- FR-A1- 2 225 321
- US-A1- 2 110 019
- US-A1- 2 318 863

## Beschreibung

Die Erfindung betrifft ein Verfahren und eine Vorrichtung zur Verminderung einer Aufwirbelung von losen Objekten aus dem Gleisbett bei der Überfahrt von Zügen. Dieses Verfahren wird insbesondere bei Schienenbahnen angewendet, bei denen Fahrzeuge mit hoher Geschwindigkeit über ein Gleisbett mit Schottersteinen verkehren.

Es ist ein bekanntes Phänomen, dass bei der Fahrt von Zügen über ein mit Schotter gefülltes Gleisbett es zur Aufwirbelung von Schottersteinen kommen kann. Aufgewirbelte Steine können am Zug abprallen und hohe Fluggeschwindigkeiten erreichen und damit nennenswerte Schäden hervorrufen. Dieses Phänomen wird von der UIC in "Design of new lines for speeds of 300 - 350 km/h, state of the art", first report, International Union Of Railways, high speed department, version dated 25 October 2001, beschrieben.

Neben anderen Phänomenen, wie z.B. Erschütterung durch Zugüberfahrt, gilt die Luftströmung zwischen Zugboden und Oberbau als der auslösende Mechanismus für die Aufwirbelung von Schottersteinen. Wissenschaftlich untersucht sind z.B. die Wanderung von Sanddünen durch Wind, das Erodieren von Ackerflächen im Wind, das Versetzen von Steinen im Flussbett, siehe z.B. Bagnold, Ralph A.: "The Phsics of Sediment transport by wind and water", ISBN 0-87262-665-2, American Society of civil engineers, 1988.

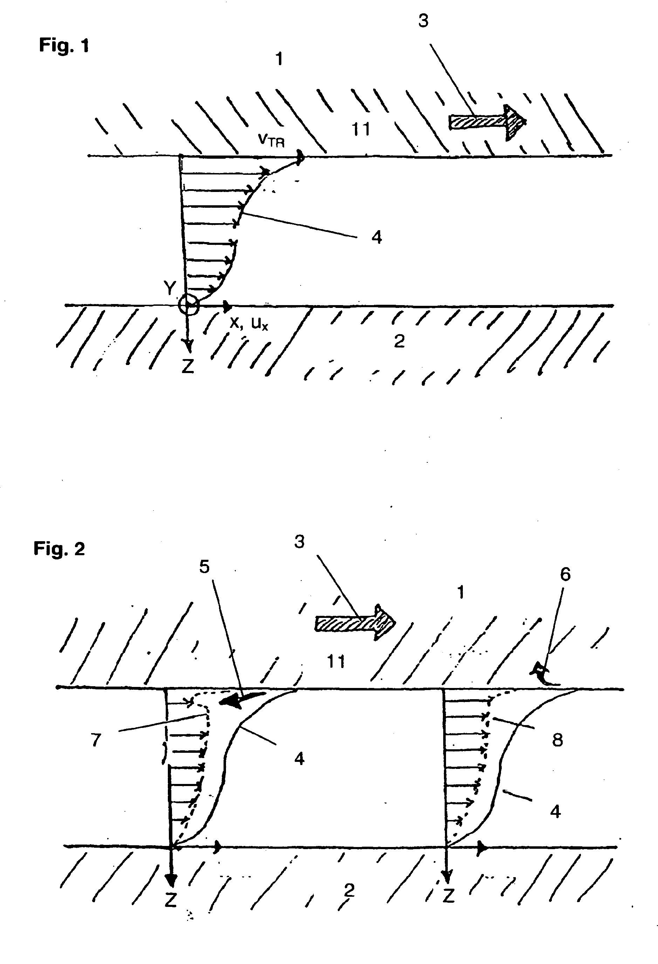

Zwischen dem Zugboden und dem Oberbau stellt sich ein dreidimensionales Strömungsprofil ein, das exemplarisch in **Fig. 1** für einen ruhenden Beobachter dargestellt ist (Formelzeichen und Koordinatensystem nach prEN 14067-1:2002 (E)). Für die Form des Strömungsprofils sind maßgebliche Parameter: die Position unter dem Zug in Längsrichtung, die Geometrie des Oberbaus (Höhe Schotter unter Schienenoberkante, strömungsmechanische Rauhigkeit) und die Geometrie des Zuges (Höhe Boden über Schienenoberkante, strömungsmechanische Rauhigkeit des Unterbodens).

Aus der US 2,318,863 ist ein Eisenbahnwagen bekannt, der Anbauten u. a. zur Vermeidung von Schädigungen infolge Schotterflug aufweist. Diese Anbauten sind als ein erstes Bauteil im Bereich zwischen den Drehgestellen in Form einer Verkleidungen angeordnet und als ein zweites Bauteil in Form einer jalousieartigen Vorsatzblende ausgeführt. Zwischen beiden Bauteilen soll sich eine nach außen gerichtete Strömung aufbauen, die ein Aufwirbeln und eine Beeinflussung durch Schotterflug vermeiden soll.

Aus der US 2,110,019 ist ein weiterer Eisenbahnwagen bekannt, der Anbauten zur Vermeidung von erheblichen Turbulenzen aufweist. Die Anbauten sind im Bereich des Drehgestells angebracht.

Die DE 25 42 780 weist seitliche und am Kopf eines Drehgestells angebrachte Verkleidungselemente auf, die nach außen leicht konvex gebogen ausgeführt sind. Diese Verkleidungselemente sollen der Schalldämmung dienen.

Eine ähnliche Wagenschürze ist aus der DE 25 42 779 bekannt, wobei diese Schürzen beweglich ausgeführt und am Drehgestell angeordnet sowie fest mit dem Längsträger des Wagenkastens verbunden sind.

Die EP 0 057 765 beschreibt ein Schienenfahrzeug, welches absenkbare und quer zur Fahrtrichtung verlaufende Windleitbleche aufweist, die für die Zeitdauer einer Überhitzung von Radbremsen oder Radlagern zur Kühlung mit Luft dienen sollen. Sie stellen eine Verkleidung des Drehgestells dar und lassen sich aus- oder zurückschwenken.

Aus der DE 3 021 870 ist ein Wagenübergang für Eisenbahnfahrzeuge bekannt, wobei die die Waggons verbindenden Außenkonturen allseitig mittels hochfesten und hochelastischen Tuches aus Kunststoff oder Gummi abdichtet werden.

Die DE 40 12 277 A1 beschreibt einen Umlenkkanal für Fahrzeuge, der im Radkasten vorzugsweise eines Straßenfahrzeuges Luft ansaugt und diese entgegen der Fahrtrichtung über eine Umlenkung abgibt.

Allen bekannten Lösungen ist gemein, dass
- keine Luft an der Außenhaut eines Fahrzeuges angesaugt wird und
- der Unterboden der Fahrzeuge starr ausgeführt ist
- das Strömungsprofil unter dem Fahrzeug wird durch keine aktiven Komponenten beeinflusst.

Es ist somit Aufgabe der Erfindung, ein Verfahren bereitzustellen, mit dem eine Verminderung einer Aufwirbelung von losen Objekten aus dem Gleisbett bei der Überfahrt von Zügen gewährleistet wird.
Diese Aufgabe wird erfindungsgemäß durch die in Anspruch 1 angegebenen Merkmale gelöst.

Nach Anspruch 1 ist ein auf das Optimierungsziel hin wirksamer Effekt die Beeinflussung der wandnahen Strömung am Unterboden des Zuges.
Für das Aufwirbeln des Schotters ist - vereinfacht ausgedrückt - die Steigung des Strömungsprofils δuₓ/δy bei y = 0 (Höhe Schotter) maßgeblich. Die erfindungsgemäßen Maßnahmen zielen daher insbesondere auf die Abflachung des Strömungsprofils.
Die Beeinflussung wandnaher Strömung am Unterboden des Zuges geschieht hierbei durch:
- ein Ausblasen wandnaher Luft am Zugboden entgegengesetzt der Fahrtrichtung. Das Ausblasen der Luft erfolgt durch Bohrungen, Düsen oder Schlitze am Unterboden des Zuges. Die benötigte Luft wird andernorts am Zug eingesogen. Die Luft wird gefördert durch Gebläse und/oder Nutzung von zugfahrtinduzierten Überdruckzonen am Lufteinlass (Position des Einlasses im Bereich von Staudruck bei Fahrt, z.B. in Lufteinlass-Hutzen).
- ein Absaugen wandnaher Luft am Zugboden. Das Absaugen wandnaher Luft erfolgt durch Bohrungen, Lochplatten, Düsen, Schlitze oder Luftschächte am Unterboden des Zuges. Die benötigte Luft wird andernorts am Zug ausgeblasen. Die eingesogene Luft wird gefördert durch Gebläse und/oder Nutzung von zugfahrtinduzierten Unterdruckzonen am Luftauslass.

Durch diese Maßnahmen werden Luftmassen der umgebenden, ruhenden Luft unter den Zugboden gefördert und reduzieren damit die Luftgeschwindigkeiten über dem Oberbau.

Technische Umsetzungen dieser Maßnahmen sind dabei insbesondere:
- Absaugen der Luft unter dem Zugboden mittels Gebläsen und/oder Nutzung von zugfahrtinduzierten Unterdruckzonen, z.B. durch Luftschächte im Wagenübergang. Dadurch das Absaugen der Luft unter dem Zugboden muss ruhende Luft aus dem Bereich seitlich des Zuges nachströmen.
- Fördern von Luft aus dem seitlichen Bereich des Zuges unter den Unterboden durch Leitbleche oder Luftkanäle. Dabei müssen Ausströmzonen (Luftkanäle z.B. im Wagenübergang) das Entweichen der Luft unter dem Zug ermöglichen.

Am unterbodenseitigen Ende einer Ausblasöffnung ist eine Klappe angebracht. Die Klappe ist drehbar um eine zur Fahrtrichtung senkrechte Achse gelagert, und deren Position durch einen Verstellmechanismus einstellbar. Hierdurch wird gewährleistet, dass die aus der Ausblasöffnung ausströmende Luft immer entgegen der Fahrtrichtung ausgeblasen wird.

Die Erfindung gemäß Anspruch 1 ist nicht nur anwendbar bei Schienenfahrzeugen, sondern insbesondere auch bei
- Straßenfahrzeugen, die durch ihre Überfahrt lose auf oder in der Fahrbahn oder dem Straßenbelag liegende Objekte aufwirbeln, und
- startenden oder landenden Flugzeugen, die während des Starts oder der Landung lose auf oder in der Start- und Landebahn liegende Objekte aufwirbeln.

Die Erfindung wird nachstehend anhand von drei Ausführungsbeispielen und einer Zeichnung mit vier Figuren näher erläutert. Die Figuren zeigen schematisch in
- **Fig. 1**: ein Strömungsprofil unter einem Zug,
- **Fig. 2**: eine Beeinflussung des Strömungsprofils unter einem Zug durch Ausblasen (links) und Absaugen (rechts),
- **Fig. 3**: Ausblasen von Luft aus einem Schlitz,
- **Fig.4**: Ausblasen von Luft aus einem Schlitz mit einem Düsenprofil,
- **Fig. 5**: Ausblasen von Luft aus einem Schlitz und einer Klappe zum Ausblasen in zwei Richtungen,
- **Fig.6**: Ausblasen von Luft durch Bohrungen.

Ein erstes Ausführungsbeispiel betrifft eine Beeinflussung des Strömungsprofils unter einem Zug durch Ausblasen und Absaugen von Luft.
Gemäß **Fig. 1** stellt sich zwischen dem Unterboden 11 des Zuges 1 und dem Oberbau 2 durch die Bewegung des Zuges 1 in der Fahrtrichtung 3 ein dreidimensionales Strömungsprofil 4 ein, das in Fig. 1 exemplarisch für einen ruhenden Beobachter dargestellt ist (Formelzeichen und Koordinatensystem nach prEN 14067-1:2002 (E)). Die Form des Strömungsprofils 4 hängt maßgeblich von folgenden Parametern ab:
- Position unter dem Zug in Längsrichtung,
- Geometrie des Oberbaus (Höhe Schotter unter Schienenoberkante, strömungsmechanische Rauhigkeit) und
- Geometrie des Zuges (Höhe Boden über Schienenoberkante, strömungsmechanische Rauhigkeit des Unterbodens).

Durch Ausblasen und Absaugen von Luft wird das Strömungsprofil 4 unter dem Zug verändert.

Ein Ausblasen wandnaher Luft am Unterboden 11 des Zuges 1 entgegengesetzt der Fahrtrichtung 3 führt zu einem Strömungsprofil 7, wie es in **Fig. 2** im linken Teil dargestellt ist.

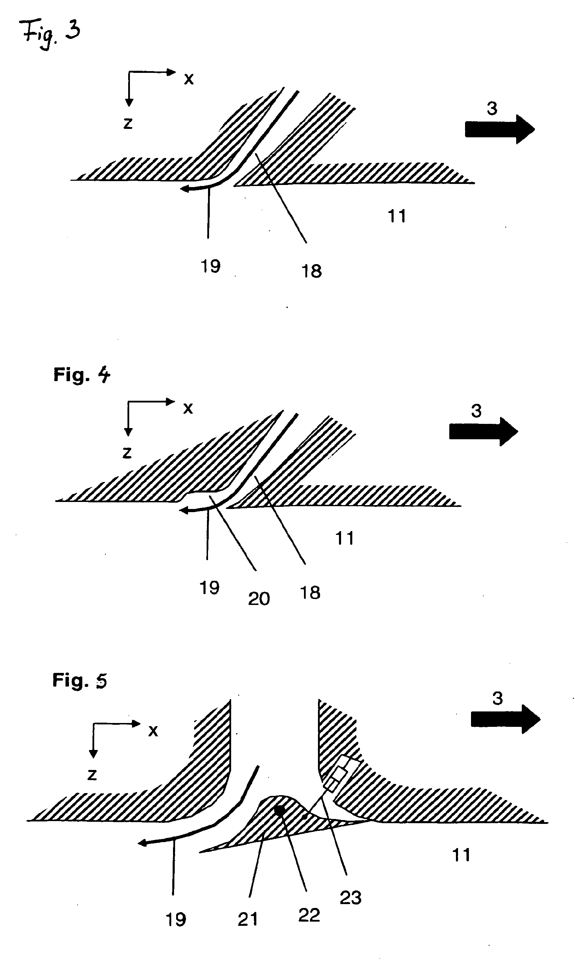

Dieses Ausblasen von Luft erfolgt gemäß **Fig. 3** aus einem Schlitz 18, der sich am Unterboden 11 des Zuges befindet. Die aus dem Schlitz 18 ausströmende Luft 19 führt zu dem geänderten Strömungsprofil 7 aus Fig. 2 unterhalb des Zuges.

In **Fig. 4** ist der Schlitz 18 zusätzlich an seinem unteren Ende in Form einer Düse 20 erweitert. Hierdurch wird insbesondere der Winkel, mit dem die ausströmende Luft 19 den Schlitz 18 verlässt, beeinflusst.

Um eine sich ändernde Fahrtrichtung 3 des Zuges zu berücksichtigen, wird gemäß **Fig.5** am unteren Ende der Ausblasöffnung eine Klappe 21 angebracht. Diese Klappe 21 wird durch einen Verstellmechanismus 23 je nach Fahrtrichtung 3 um die Achse 22 gekippt, so dass die ausströmende Luft 19 immer entgegen der Fahrtrichtung 3 ausgeblasen wird.

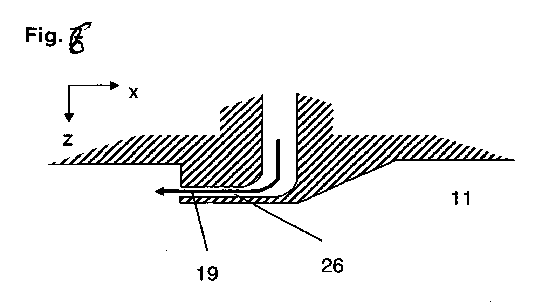

In **Fig. 6** wird die ausströmende Luft 19 durch eine Bohrung 26 geführt, die an die Ausblasöffnung angeschlossen ist. Hierdurch wird erreicht, dass die ausströmende Luft 19 nahezu parallel zu dem Unterboden 11 des Zuges ausströmt.

### Bezugszeichenliste

- 1: Zug
- 2: Oberbau
- 3: Fahrtrichtung des Zuges
- 4: Strömungsprofil
- 5: Zuluft
- 6: Abluft
- 7: Strömungsprofil mit Ausblasung
- 8: Strömungsprofil mit Absaugung
- 9: Drehgestellverkleidung
Unterboden des Zuges Seitenwand des Zuges
- 17: Flugrichtung des Schottersteins
- 18: Schlitz
- 19: ausströmende Luft
- 20: Düse
- 21: Klappe
- 22: Drehachse der Klappe
- 23: Verstellmechanismus

- 26: Bohrung

## Patentansprüche

1. Verfahren zur Verminderung einer Aufwirbelung von losen Objekten aus dem Gleisbett bei der Überfahrt eines Zuges, **dadurch gekennzeichnet, dass** wandnahe Strömung am Unterboden (11) des Zuges beeinflusst wird indem
- Luft an der Außenhaut oder am Zugboden des Zuges angesaugt und als wandnahe Luft am Zugboden entgegengesetzt der Fahrtrichtung ausgeblasen wird (19) und
- eine Ktappe (21) am unterbodenseitigen Ende einer Ausblasöffnung (18) angebracht ist, die drehbar um eine zur Fahrtrichtung senkrechte Achse gelagert ist, und deren Position durch einen Verstellmechanismus einstellbar ist, und die bei sich ändernden Fahrtrichtung des Zuges betätigt wird, damit die ausströmende Luft inner entgegen der Fahrtrichtung ausgeblasen wird.

## Claims

1. A method for reducing swirling-up of loose objects from the track bed by a. travelling train, **characterized in that** flow close to the wall on the underbody (11) of the train is influenced **in that**
- air on the outer skin or on the train floor of the train is sucked in and, as air close to the wall, is blown out (19) again on the train floor opposite to the travelling direction and
- a flap (21) on the underfloor-sided end of a blow-out opening (18) is attached which is rotatably mounted about an axis that is vertical to the travelling direction and whose position is adjustable through an adjusting mechanism and which is actuated upon changing travelling direction of the train so that the outflowing air is always blown out opposite to the travelling direction.

## Revendications

1. Procédé de réduction d'un tourbillonnement d'objets épars depuis un ballast lors du passage d'un train, **caractérisé en ce qu'**on agit sur l'écoulement proche de la cloison au niveau du dessous de caisse (11) du train du fait que
- de l'air est aspiré au niveau de l'enveloppe extérieure ou du fond de caisse du train et est soufflé en tant qu'air proche de la cloison au niveau du fond de caisse du train dans le sens inverse au sens de circulation (19) et
- qu'est installé, à l'extrémité située côté dessous de caisse d'un orifice de soufflage (18), un volet (21) qui s'appuie en rotation autour d'un axe perpendiculaire au sens de circulation et dont la position est réglable par un mécanisme de réglage et qui, en cas de changement de sens de circulation du train, est actionné pour que l'air s'écoulant vers l'extérieur soit toujours soufflé dans le sens inverse au sens de circulation.
